# EUROPÄISCHE PATENTSCHRIFT

(11) **EP 0 455 952 B1**
(45) Veröffentlichungstag und Bekanntmachung des Hinweises auf die Patenterteilung: **10.11.1993**
(21) Anmeldenummer: 91103550.9
(22) Anmeldetag: 08.03.1991
(51) Int. Cl.: F16B 13/06

(54) **Befestigungselement zum Verankern in einem Bohrloch eines Betonteiles**
Fastener for anchoring in a predrilled hole of a concrete part
Elément de fixation pour ancrer dans le trou prépercé d'une pièce en béton

(30) Priorität: 07.05.1990 DE 4014522
(43) Veröffentlichungstag der Anmeldung: 13.11.1991
(73) Patentinhaber: fischerwerke Artur Fischer GmbH & Co. KG, D-72178 Waldachtal (DE)
(72) Erfinder: Fischer, Artur, Prof. Dr. h. c., W-7244 Waldachtal 3/Tumlingen (DE); Weber, Wilfried, W-7294 Schopfloch-Unteriflingen (DE)

(56) Entgegenhaltungen:
- EP-A- 0 218 932
- DE-A- 2 505 402

## Beschreibung

Die Erfindung betrifft ein Befestigungselement zum Verankern in einem Bohrloch eines Betonteiles mit einem Spreizkörper und einer Spreizhülse gemäß der Gattung des Hauptanspruches (EP-A 0 218 932).

Es sind Befestigungselemente bekannt, die im wesentlichen aus einem Gewindebolzen, einer Spreizhülse und einem in die Spreizhülse einziehbaren Spreizkörper mit Spreizkonus bestehen. Die Spreizhülse besitzt Längsschlitze, die beim Einziehen des Spreizkörpers ein Aufspreizen der Spreizhülse ermöglichen. Am anderen Ende kann das Befestigungselement als Gewindebolzen ausgebildet sein, an dem mittels einer Mutter ein Gegenstand befestigbar ist. Beim Aufschrauben der Mutter wird der mit dem Gewindebolzen verbundene Spreizkörper in die Spreizhülse eingezogen. Die am Befestigungsgegenstand sich abstützende Spreizhülse wird dadurch aufgespreizt und somit das Befestigungselement im Bohrloch verankert.

Treten bei einem derart in ein Bohrloch eingesetzten und verankerten Befestigungselement momentane Überbelastungen bzw. Schockbelastungen auf, die durch heftige Erschütterungen oder Erdbeben erzeugt werden können, so besteht die Gefahr, daß die dabei auftretenden hohen Kraftstöße vom Befestigungselement nicht aufgefangen werden können und dieses aus dem Bohrloch ausbricht bzw. der Bolzen abreißt.

Der Erfindung liegt die Aufgabe zugrunde, ein Befestigungselement zu schaffen, das zur Vermeidung eines Bohrlochausbruches oder Abreißen des Bolzens in der Lage ist, Stoßbelastungen zu absorbieren.

Die Lösung dieser Aufgabe wird bei einem Befestigungselement der eingangs genannten Gattung durch die im kennzeichnenden Teil des Hauptanspruches angegebenen Merkmale erreicht. Bei der Verankerung des erfindungsgemäßen Befestigungselementes wird der Spreizkörper in den ersten Abschnitt der Innenbohrung der Spreizhülse eingezogen. Da der Durchmesser dieses Abschnittes dem kleinsten Konusdurchmesser entspricht, steht die maxial mögliche Wandungsdicke für die Verankerung zur Verfügung. Dadurch werden hohe Haltekräfte bei normaler statischer Belastung des Befestigungselementes erreicht.

Bei Schockbeanspruchungen durch Erdbeben können sich kurzzeitig Belastungen ergeben, die über dem normalen Haltewert eines Befestigungselementes liegen. Durch den sich an den ersten Abschnitt anschließenden erweiterten Abschnitt der Spreizhülse wird der Spreizkörper durch die kurzzeitige Überbeanspruchung in den erweiterten Abschnitt gezogen. Dabei wird ein Teil des sich durch die Überbelastung ergebenden zusätzlichen Spreizdruckes im Bohrloch abgebaut und damit die Beanspruchung des Bolzens sowie des Betons reduziert. Durch dieses duktile Verhalten des Befestigungselementes wird ein Ausbruch des Bohrloches oder ein Abreißen des Bolzens durch die kurzzeitige Überbelastung vermieden. Durch die konische Erweiterung des zweiten Abschnittes erfolgt eine stetig zunehmende Entlastung in Abhängigkeit von dem axialen Verschiebeweg des Spreizkörpers in der Spreizhülse. Nach einer solchen Schockbelastung ist es allerdings notwendig, das Befestigungselement auszutauschen.

Ein optimales duktiles Verhalten des Befestigungselementes wird dann erreicht, wenn der konische Abschnitt der Innenbohrung der Spreizhülse etwa dem eineinhalbfachen des ersten Abschnittes, und der Durchmesser des erweiterten Abschnittes etwa dem mittleren Durchmesser des Spreizkonusses des Spreizkörpers entspricht.

Um eine gute Abstützung des Befestigungsbolzens in der Dübelhülse, insbesondere zur Aufnahme von Querkräften, zu erreichen, ist es zweckmäßig, daß der Befestigungsbolzen im Anschluß an den Spreizkörper eine der Kontur der Innenbohrung der Spreizhülse entsprechende Einschnürung aufweist.

Ist die Verankerung des Befestigungselementes in einem Bohrloch mit Hinterschneidung vorgesehen, sollte der größte Durchmesser des Spreizkonusses des Spreizkörpers etwa dem Außendurchmesser der Spreizhülse entsprechen. Damit wird sichergestellt, daß nach der Verankerung die in die Hinterschneidung eingebogenen Spreizsegmente der Spreizhülse die Hinterschneidung voll ausfüllen.

Die Erfindung wird nachfolgend anhand der Zeichnung nähers erläutert.

Es zeigen:
- Figur 1: das in einem Bohrloch mit Hinterschneidung verankerte erfindungsgemäße Befestigungselement,
- Figur 2: den Verankerungszustand des Befestigungselementes nach einer Schockbelastung und
- Figur 3: die Spreizhülse des Befestigungselementes

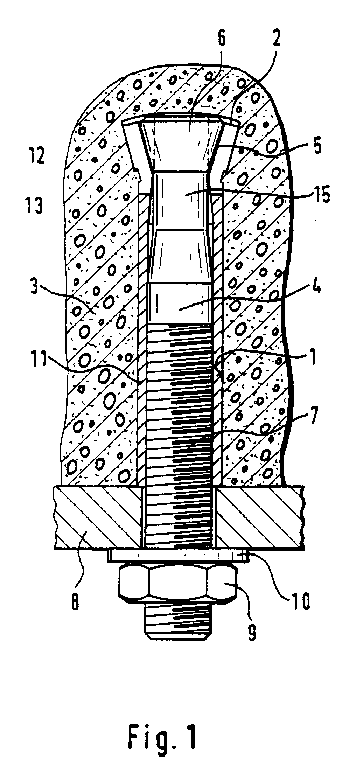

Das in Figur 1 dargestellte Befestigungselement ist in einem Bohrloch 1 mit Hinterschneidung 2 eines Betonteiles 3 verankert. Das Befestigungselement besteht aus einem Gewindebolzen 4, an dessen vorderen Ende der mit einem Spreizkonus 5 versehene Spreizkörper 6 aufgeschraubt ist. Das gegenüberliegende Ende des Gewindebolzens 4 weist einen Gewindeabschnitt 7 auf, auf den der zu befestigende Gegenstand 8 aufgesteckt und mittels einer Mutter 9 und Unterlagscheibe 10 an dem Betonteil 3 befestigt ist. Zur Verankerung wird auf den auf dem Bohrlochgrund aufsitzenden Spreizkörper 6 eine Spreizhülse 11 mittels eines Einschlagwerkzeuges (nicht dargestellt) aufgetrieben. Dabei werden die durch Längsschlitze 12 gebildeten Spreizsegmente 13 der Spreizhülse in die Hinterschneidung 2 eingebogen.

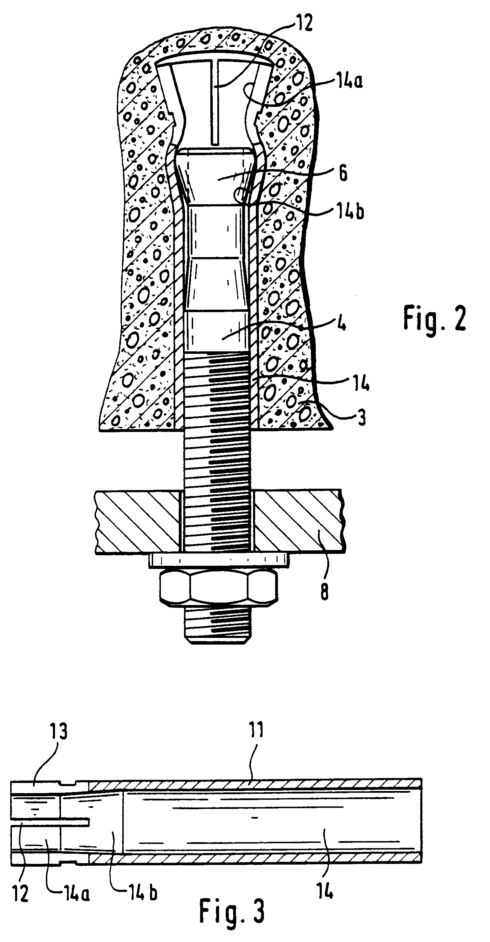

In Figur 3 ist die Spreizhülse 11 im ungespreizten Zustand und ohne Gewindebolzen dargestellt. Der erste Abschnitt 14a der Innenbohrung 14 weist einen Durchmesser auf, der dem kleinsten Durchmesser des Spreizkonusses 5 entspricht. Zur Bildung der Spreizsegmente 13 ist dieser Teil der Dübelhülse von der vorderen Stirnseite ausgehend bis etwa zur Mitte des konisch sich erweiternden Abschnittes 14b der Innenbohrung mit Längsschlitzen 12 versehen. Der sich konisch erweiternde Abschnitt 14b setzt sich danach mit dem größten Durchmesser dieses Abschnittes bis zum anderen Ende der Dübelhülse fort. Der Gewindebolzen 4 ist in Anpassung an die Innenkontur der Dübelhülse im Anschluß an den Spreizkörper mit einer Einschnürung 15 versehen, deren Durchmesser dem Innendurchmesser des ersten Abschnittes 14a entspricht.

Figur 2 zeigt die axiale Verschiebung des Gewindebolzens 4 nach einer beispielsweise durch Erdbeben ausgelösten Schockbelastung. Der Spreizkörper 6 wird durch die kurzzeitige Überbeanspruchung in den konisch sich erweiternden Abschnitt 14b gezogen und dabei die auftretende Energie vernichtet. Da jedoch der Durchmesser des erweiterten Abschnittes 14b etwa dem mittleren Durchmesser des Spreizkonusses 5 des Spreizkörpers 6 entspricht, wird auch in dieser Stellung noch eine für die Halterung des befestigten Gegenstandes 8 ausreichende Haltekraft erzielt. Allerdings ist der Gegenstand nicht mehr mit der Oberfläche des Betonteiles 3 verspannt und das Befestigungselement soweit geschädigt, daß ein Auswechseln des Befestigungselementes für eine Neubefestigung des Gegenstandes 8 erforderlich ist. Mit dem erfindungsgemäßen Befestigungselement wird jedoch erreicht, daß während und nach der Überbeanspruchung der Befestigungsgegenstand gegen Herunterfallen gesichert bleibt. Das Befestigungselement eignet sich daher besonders für einen Einsatz in erdbebengefährdeten Gebieten.

## Patentansprüche

1. Befestigungselement zum Verankern in einem Bohrloch eines Betonteils mit einem mit einem Gewindebolzen verbundenen und einen Spreizkonus aufweisenden Spreizkörper und einer mehrere vom vorderen Ende ausgehende und über einen Teil ihrer Länge verlaufende Längsschlitze aufweisende Spreizhülse, **dadurch gekennzeichnet,** daß die Innenbohrung (14) der Spreizhülse (11) von ihrem vorderen Ende ausgehend einen etwa der Länge des Spreizkonusses (5) des Spreizkörpers (6) entsprechenden ersten zylindrischen Abschnitt (14a) mit einem dem kleinsten Durchmesser des Spreizkonusses (5) entsprechenden Durchmesser aufweist, an den sich ein zweiter sich konisch erweiternder Abschnitt (14b) anschließt, der sich mit dem größten Durchmesser dieses Abschnittes zylindrisch fortsetzt, und daß die Längsschlitze (12) in dem sich konisch erweiternden Abschnitt (14b) der Innenbohrung (14) enden.

2. Befestigungselement nach Anspruch 1, **dadurch gekennzeichnet**, daß der konische Abschnitt (14b) in der Innenbohrung (14) mindestens der Länge, maximal der doppelten Länge, des ersten Abschnittes (14a) entspricht.

3. Befestigungselement nach Anspruch 1, **dadurch gekennzeichnet**, daß der Durchmesser des erweiterten Abschnittes (14b) etwa dem mittleren Durchmesser des Spreizkonusses (5) des Spreizkörpers (6) entspricht.

4. Befestigungselement nach Anspruch 1, **dadurch gekennzeichnet,** daß der Gewindebolzen (4) im Anschluß an den Spreizkörper (6) eine der Kontur der Innenbohrung (14) der Spreizhülse (11) entsprechende Einschnürung (15) aufweist.

5. Befestigungselement zum Verankern in einem Bohrloch mit Hinterschneidung nach Anspruch 1, **dadurch gekennzeichnet,** daß der größte Durchmesser des Spreizkonusses (5) des Spreizkörpers (6) etwa dem Außendurchmesser der Spreizhülse (11) entspricht.

## Claims

1. A fixing element for anchoring in a hole drilled in a concrete part, with an expansible body joined to a threaded bolt and having an expander cone, and with an expansible sleeve having several longitudinal slots starting from the front end and extending for a part of the length of the expansible sleeve, characterized in that the internal bore (14) of the expansible sleeve (11), starting from the front end thereof, has a first cylindrical portion (14a) corresponding approximately to the length of the expander cone (5) of the expansible body (6) and having a diameter corresponding to the smallest diameter of the expander cone (5), adjoining which first portion there is a second, conically widening, portion (14b) which is continued cylindrically with the largest diameter of this portion, and the longitudinal slots (12) terminate in the conically widening portion (14b) of the internal bore (14).

2. A fixing element according to claim 1, characterized in that the conical portion (14b) in the internal bore (14) corresponds at least to the length, at most twice the length, of the first portion (14a).

3. A fixing element according to claim 1, characterized in that the diameter of the widened portion (14b) corresponds approximately to the mean diameter of the expander cone (5) of the expansible body (6).

4. A fixing element according to claim 1, characterized in that, adjoining the expansible body (6), the threaded bolt (4) has a constriction (15) corresponding to the contour of the internal bore (14) of the expansible sleeve (11).

5. A fixing element for anchoring in a drilled hole with an undercut according to claim 1, characterized in that the largest diameter of the expander cone (5) of the expansible body (6) corresponds approximately to the external diameter of the expansible sleeve (11).

## Revendications

1. Elément de fixation destiné à être ancré dans un trou foré d'une pièce en béton comportant un corps d'expansion relié à un goujon fileté et présentant un cône d'expansion, et une douille d'expansion présentant plusieurs fentes longitudinales partant de l'extrémité avant et s'étendant sur une partie de sa longueur, caractérisé en ce que l'alésage intérieur (14) de la douille d'expansion (11) présente, à partir de son extrémité avant, une première partie cylindrique (14a) correspondant approximativement à la longueur du cône d'expansion (5) du corps d'expansion (6) dont le diamètre correspond au plus faible diamètre du cône d'expansion (5), à laquelle partie cylindrique se raccorde une deuxième partie (14b) qui s'élargit coniquement et qui se prolonge de façon cylindrique en présentant le plus grand diamètre de cette partie, et en ce que les fentes longitudinales (12) se terminent dans la partie (14b) de l'alésage intérieur (14) qui s'élargit coniquement.

2. Elément de fixation selon la revendication 1, caractérisé en ce que la partie conique (14b) de l'alésage intérieur (14) correspond approximativement à au moins la longueur, au maximum au double de cette longueur, de la première partie (14a).

3. Elément de fixation selon la revendication 1, caractérisé en ce que le diamètre de la partie élargie (14b) correspond approximativement au diamètre moyen du cône d'expansion (5) du corps d'expansion (6).

4. Elément de fixation selon la revendication 1, caractérisé en ce que le goujon fileté (4) présente, raccordé au corps d'expansion (6), un rétrécissement (15) correspondant au contour de l'alésage intérieur (14) de la douille d'expansion (11).

5. Elément de fixation pour ancrage dans un trou comportant une contre-dépouille selon la revendication 1, caractérisé en ce que le plus grand diamètre du cône d'expansion (5) du corps d'expansion ((6) correspond approximativement au diamètre extérieur de la douille d'expansion (11).
